# EUROPÄISCHE PATENTSCHRIFT

(11) **EP 1 050 995 B1**
(45) Veröffentlichungstag und Bekanntmachung des Hinweises auf die Patenterteilung: **01.09.2004**
(21) Anmeldenummer: 00102485.0
(22) Anmeldetag: 05.02.2000
(51) Int. Cl.: H04L 12/28, H04L 12/423

(54) **Steuerbefehl zur Anzeige von Bildern in lokalem, ringförmigen Netzwerk**
Control commands for displaying images in a local ring network
Données de commande pour l'affichage d'images dans un réseau local en anneau

(30) Priorität: 25.02.1999 DE 19908082
(43) Veröffentlichungstag der Anmeldung: 08.11.2000
(73) Patentinhaber: Harman Becker Automotive Systems GmbH, 76307 Karlsbad (DE)
(72) Erfinder: Stiegler, Andreas, 76275 Ettlingen (DE); Becker, Michael, 76661 Philippsburg (DE); Schöpp, Harald, 76275 Ettlingen (DE); Klaus-Wagenbrenner, Jochen, 76571 Oberweier (DE); Wietzke, Joachim, 76288 Karlsruhe (DE)
(74) Vertreter: Patentanwälte Westphal, Mussgnug & Partner

(56) Entgegenhaltungen:
- EP-A- 0 855 311
- DE-A- 19 653 438
- DE-C- 19 503 212

## Beschreibung

Die Erfindung betrifft ein lokales Netzwerk mit mehreren Teilnehmern, die miteinander mittels einer optischen Datenleitung zur Übertragung von Audio- und/oder Videodaten sowie von Steuerdaten zu einem ringförmigen Netzwerk verbunden sind.

Aus der EP 0 855 311 A2 ist ein Soundsystem für ein Kraftfahrzeug bekannt. Bestandteil dieses Soundsystems ist ein Bussystem in Ringform, über das Audio- und Videodaten übertragen werden. Es ist eine Steuereinheit vorgesehen, welche Steuerbefehle ausgibt, und es sind Einheilen zur Gewinnung von Quelldaten in Form von Audio- und Videodaten sowie Einheiten zur Darstellung der Videodaten und Lautsprecher zur Ausgabe der Audiodaten vorgesehen.

Aus der europäischen Patentanmeldung EP 0 725 522 A2 ist ein lokales Netzwerk bekannt, das eine Übertragung von Audiound/oder Video- sowie Steuerdaten in einem ringförmigen Netzwerk zwischen Datenquellen und Datensenken ermöglicht. Dabei werden die Videodaten, das können bewegliche, veränderliche Bilddaten sein oder auch unveränderliche Standbilder oder Grafikdaten sein, als Quelldaten in einem spezifischen Format in einem entsprechenden Quelldatenbereich übertragen. Davon getrennt werden in einem entsprechend reservierten anderen Bereich für Steuerdaten, die Steuerbefehle übertragen. Als Steuerbefehle sind dabei beispielsweise Informationen zur Arbitrierung oder Kanalfestlegung vorgesehen. Daneben können beliebige, unformatierte transparente Daten ohne Bezug zur Formatierung der Steuerdaten und ohne inhaltlichen Bezug zu den einzelnen Teilnehmern des Netzwerkes in den Bereich für die Übertragung von Steuerdaten vorgesehen ist, übertragen werden. Welchen Inhalt diese Daten haben, hat keine Auswirkung auf die Funktion der einzelnen Teilnehmer. Insbesondere können diese Daten keine Steuerdaten oder Steuerbefehle für einzelne Teilnehmer des Netzwerkes bilden. Um Wiederholungen zu vermeiden, wird bezüglich der Darstellung des Übertragungsformates, insbesondere der synchronen Datenübertragung in einem kontinuierlichen Datenstrom auf die Offenbarung die der EP 0 725 522 A2 verwiesen.

Dieses lokale Netzwerk zeigt Steuerbefehle mit einer starren, festgefügten Befehlsstruktur. Ein bestimmter Steuerbefehl hat dabei einen festgelegten Aufbau und damit eine festgelegte Befehlskopfsequenz, auf die eine unveränderliche Anzahl an Parametern folgt. Die Datenquelle gibt den Steuerbefehl über ihr Interface an die ringförmige Datenleitung, die diesen Steuerbefehl mit den zugehörigen Parametern an die zugeordnete Datensenke weiterleitet, die in Kenntnis des unveränderlichen Aufbaus des Steuerbefehls bestimmte Abläufe aufgrund des Steuerbefehls einleitet. Dieser Ablauf ermöglicht es nur, Datensenken in das lokale Netzwerk zu integrieren, die den vollständigen Befehlssatz der Datenquellen, einschließlich ihres Aufbaus kennen und verarbeiten können. Damit ist es nicht möglich, daß die Datensenken unabhängig von den Datenquellen ausgebildet werden, was die Flexibilität des lokalen Netzwerkes insbesondere bezüglich Update wesentlich einschränkt.

Aufgabe der Erfindung ist es, ein lokales Netzwerk mit mehreren Teilnehmern zu schaffen, welches eine größere Flexibilität zeigt.

Diese Aufgabe wird erfindungsgemäß durch ein lokales Netzwerk mit den Merkmalen des Anspruchs 1 sowie ein Verfahren zur Übertragung von Audio- und/oder Videodaten sowie von Steuerdaten in einem ringförmigen lokalen Netzwerk mit den Merkmalen des Anspruchs 5 gelöst.

Vorteilhafte Weiterbildungen ergeben sich aus den Unteransprüchen.

Die Erfindung zeigt ein lokales Netzwerk mit einer Datenquelle, die eine Steuereinheit und ein Interface zur ringförmigen Datenleitung aufweist und die einen Steuerbefehl mit allein durch die Datenquelle selbst festgelegter Länge generiert und über das Interface an die ringförmige Datenleitung gibt. Die Länge des Steuerbefehls ergibt sich aus der Befehlskopfsequenz und eine sich daran anschließende Folge von Parametern, die in ihrer Anzahl n durch die Datenquelle selbst festgelegt ist. Die Anzahl an Parametern n kann aufgrund der Abhängigkeit von der jeweiligen Datenquelle für unterschiedliche Datenquellen verschieden groß sein, so daß die Länge des Steuerbefehls abhängig von den Eigenschaften der Datenquelle unterschiedlich festgelegt ist. Nachdem der Steuerbefehl über das Interface der Datenquelle an die ringförmige Datenleitung gegeben ist, wird der Steuerbefehl durch eine durch die Befehlskopfsequenz festgelegten Datensenke gelesen. Dabei wird der Steuerbefehl über das Interface einer Steuereinheit zugeführt. In der Steuereinheit wird der Steuerbefehl, der eine durch die Datenquelle festgelegte Länge hat, interpretiert, indem eine festgelegte Anzahl an Parametern m ausgewertet werden. Die Anzahl der durch die Datensenke auszuwertenden Parametern m ist durch die Eigenschaften der Datensenke bestimmt und somit unabhängig von der Datenquelle für diesen Steuerbefehl. Ist n >= m, werden die ersten m Parameter aus der Folge von den n Parametern des Steuerbefehls interpretiert. Ist n < m, werden die ersten n Parameter interpretiert. Durch die Steuereinheit werden aus einem Speicher der Datensenke zielgerichtet den m Parametern entsprechende Videodaten ausgelesen und der Bildausgabeeinheit zur Ausgabe zugeführt. Die Bildausgabeeinheit kann dabei Teil der Datensenke sein, oder mit dieser verbunden sein. Die Videodaten können dabei sowohl als unveränderliche Grafikdaten, als Standbilder oder als Bildsequenz aus dem Speicher ausgelesen und zur Ausgabe gebracht werden. Durch das Lösen der Datenquelle und der Datensenke von einem festgefügten unveränderlichen Befehlsformat für die Steuerbefehle mit einer unveränderlichen Anzahl an Parametern gelingt es, die Flexibilität des lokalen Netzwerks wesentlich zu erhöhen. Dadurch wird es insbesondere möglich, einzelne Datensenken unabhängig von der Datenquelle auszutauschen oder solche zusätzlich hinzuzufügen. Weiterhin ist es auch möglich, mit einem einzigen Steuerbefehl mit n Parametern unterschiedliche Datensenken anzusprechen und in ihren Bildausgabeeinheiten abhängig von den Eigenschaften der Datensenke, d. h. abhängig von der Anzahl der jeweils ausgewerteten, interpretierten Parametern (m1, m2, ...) unterschiedliche Grafiken, Standbilder oder Videosequenzen darzustellen.

Daneben ist es aber auch möglich, eine oder mehrere Datenquellen des lokalen Netzwerkes durch andere zu ersetzen oder neue hinzuzufügen ohne daß eine entsprechende Anpassung in den Datensenken erforderlich ist. Beispielsweise kann eine Datenquelle hinzugefügt werden, die eine größere Anzahl von Parametern (n) für einen bestimmten Steuerbefehl zur Verfügung stellen kann, ohne daß dies eine Veränderung in den Datensenken bewirkt. Sind die Datensenken nicht in der Lage, diese zusätzlichen Parameter auszuwerten, so verändern sich die dargestellten Videodaten in den betreffenden Bildausgabeeinheiten nicht. Dagegen verändert sich das dargestellte Bild, wenn zusätzliche Parameter durch die Datensenke interpretierbar sind und diesen zusätzlichen Parametern zugehörige Dateninhalte aus dem Speicher entnehmbar sind und zusätzlich auf der Bildausgabeeinheit zu den zuvor dargestellten Bildinformationen ausgegeben werden können.

Die Parameter des Steuerbefehls repräsentieren bestimmte Bildinhalte, die gemeinsam in der Bildausgbeeinheit der betreffenden Datensenke zur Ausgabe gebracht werden. Ist die Datensenke in der Lage, eine Vielzahl von Parametern m zu interpretieren und die entsprechenden Bildinformationen aus dem Speicher abzurufen, so ergibt sich ein sehr detailliertes Bild auf der Bildausgabeeinheit. Dagegen erweist sich das ausgegebene Bild als sehr wenig detailliert, wenn die Anzahl m der ausgewerteten Parameter in der Datensenke sehr klein ist.

Als besonders vorteilhaft hat sich erwiesen, die Parameter in dem Steuerbefehl hierarchisch anzuordnen. Diese hierarchische Ordnung gewährleistet, daß der erste Parameter einen Bildinhalt von allgemeinem, wenig spezifischem, wenig detailliertem Inhalt repräsentiert, während jeder folgende Parameter jeweils einen noch spezifischeren, detaillierteren Bildinhalt repräsentiert. Durch diese hierarchische Gliederung mit ein um mit der Anzahl der ausgewerteten Parametern stetig steigenden detaillierteren, spezifischeren Bildinhalt ist gewährleistet, daß bei einer Auswertung der ersten m Parameter stets die allgemeinste Information zum Bildinhalt mitberücksichtigt wird und ebenso die entsprechend am wenigsten detaillierten, allgemeinsten Bildinhalte berücksichtigt sind.

Demzufolge ist erreicht, daß bei einer einfach ausgebildeten Datensenke, die nur einen geringen Bildinhalt darstellen kann, was durch die Auflösung, die Anzahl der wiederzugebenden Farben oder ähnliches bedingt ist, stets die grundlegenden Informationen mit dem allgemeinsten Inhalt, entsprechend der niedrigen Zahl m für die auszuwertenden Parametern zur Darstellung gebracht werden, während bei einer aufwendigen, komplexen, leistungsfähigen Datensenke, welche eine hohe Zahl m an Parametern auswerten kann und zur Darstellung bringen kann ein vielfältigeres und detaillierteres und spezifischeres Gesamtbild widergegeben wird. Dabei aus dem Speicher zu den verschiedenen Parametern 1 bis m gemeinsam zur Wiedergabe gebracht. Durch die hierarchische Struktur ist es möglich auf einfache Weise stets die ersten Parameter auszuwerten, welche die allgemeinsten Bildinformationen repräsentieren diese Gliederung ist die Auswertung in der Datensenke auf sehr einfache, schnelle und sichere Weise ermöglicht.

Ist die Datensenke in der Lage, gleichviel oder mehr Parameter zu interpretieren oder auszuwerten als Parameter (n) von der Datenquelle übertragen werden, so wird die Datensenke vorzugsweise die n Parameter interpretieren, die entsprechenden Bildinhalte aus dem Speicher entnehmen und diese gemeinsam zur Ausgabe bringen. Ist die Datensenke aufgrund ihrer Eigenschaft in der Lage nur m Parameter von einer größeren Zahl von n von der Datenquelle zur Verfügung gestellten Parameter auszuwerten, so werden nur diese ersten m Parameter ausgewertet und die entsprechenden Bildinformationen über die Bildausgabeeinheit dargestellt. Die weiteren Parameter, welche nach dem m-ten Parameter Teil des Steuerbefehl sind, werden durch diese Datenquelle, welche nur m Parameter interpretieren kann, nicht ausgewertet und dementsprechend auch nicht durch ein entsprechenden Bildinhalt bei der Ausgabe auf der Bildausgabeeinheit repräsentiert. Durch diese Ausbildung der Datensenke gelingt es die Steuereinheit von unnötigen Belastungen zu befreien, da nur diejenigen Parameter interpretiert und werden, die für diese Datensenke mit ihren spezifischen Eigenschaften und damit festgelegten Wert m relevant sind.

Es hat sich als sehr vorteilhaft erwiesen, die erfindungsgemäße Datensenke in einen Einspeicherbetriebszustand zu überführen, in dem über das Interface zugeführte Videodaten in den Speicher der Datensenke eingeschrieben werden und diese Videodaten in den gewöhnlichen Betriebszustand mittels der Steuereinheit aufgrund eines entsprechenden Steuerbefehls mit dementsprechenden Parametern zur Ausgabe gebracht werden können. Mittels dieses Einspeicherbetriebszustandes ist es möglich, die Darstellungen auf der Bildausgabeeinheit der erfindungsgemäßen Datensenke über das Netzwerk zu aktualisieren, ohne das die Datensenke ausgetauscht werden muß. Damit ist auf einfache und flexible Weise eine Anpassung der Bildausgaben bei geänderten Rahmenbedingungen möglich.

Vorzugsweise bestimmt die Steuereinheit nicht nur den Inhalt der darzustellenden Bilder durch das Auslesen der betreffenden Bildinhalte aus dem Speicher der Datensenke aufgrund der ausgewerteten m Parameter des Steuerbefehls, sondern sie bestimmt darüber hinaus auch die Eigenschaften der Bildwiedergabe der Bildausgabeeinheit; insbesondere die Bildeigenschaften wie Kontrast, Farbe, Bildhelligkeit, Bildwinkel, Ausschnitt oder ähnliches. Dabei erhält die Steuereinheit der Datensenke die relevanten Steuerdaten über die ringförmige Datenleitung innerhalb )des Steuerbefehls mit der variablen, durch die Eigenschaften der Datenquelle festgelegten Länge. Durch diese zusammenhängende Übertragung der Parameter zusammen mit den Steuerdaten zu den Bildeigenschaften gelingt es auf sehr effiziente Weise die Steuerung der Bildwiedergabe bei sehr niedriger Auslastung der Übertragungskapazität des Netzwerkes zu gewährleisten.

Weiterhin hat es sich als sehr vorteilhaft erwiesen, neben den Parametern und der Befehlskopfsequenz die Anzahl der nachfolgenden Parametern (n) zu übertragen, wodurch die Auswertung des Steuerbefehles wesentlich vereinfacht ist. Insbesondere dann, wenn ein Vergleich der Anzahl (m) der auswertbaren Parametern in der Datensenke mit den n zur Verfügung stehenden Parametern im Steuerbefehl erfolgt. Durch diese Übertragung der Anzahl der übertragenen Parameter gelingt es die Steuerung zu vereinfachen, da nun der Steuerbefehl nicht mehr auf eine spezifische Steuerbefehlsendekennung überwacht werden muß der Steuerbefehl oder nur eine maximale Steuerbefehlslänge haben darf. Sollen in diesem letzten Fall Steuerbefehle mit geringerer Länge (geringerer Parameterzahl) übertragen werden, so müssen bei dieser ungünstigen Organisationsform die nicht verwendeten Parameterplätze mit inhaltsleeren lückenfüllenden Signalen, bsp. 00, aufgefüllt werden. Hierdurch wird die Übertragungskapazität des lokalen Netzwerkes erheblich eingeschränkt und die Flexibilität beeinträchtigt. Dagegen erweist sich die vorgeschlagene Weiterbildung mit der Übertragung der Anzahl der folgenden Parametern (n) als äußerst flexibel und sehr effizient in der Ausnutzung der Übertragungskapazität, zumal durch dieses Verfahren nahezu beliebig lange Steuerbefehle möglich sind.

Ein bevorzugtes Ausführungsbeispiel der Erfindung ist in den Figuren 1-3 dargestellt und wird im folgenden näher beschrieben.
- Fig. 1: zeigt den Aufbau eines lokalen ringförmigen Netzwerks,
- Fig. 2: zeigt den Aufbau eines Formates, in dem die Audiound/oder Videodaten und die Steuerdaten übertragen werden und
- Fig. 3: zeigt den Aufbau eines erfindungsgemäßen Steuerbefehls.

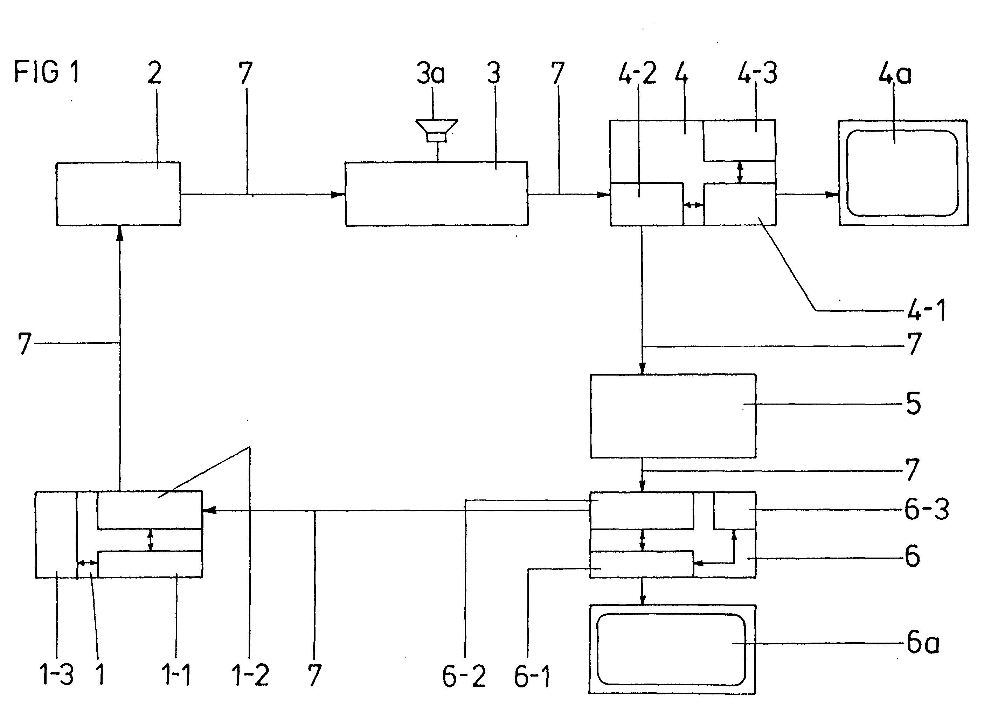

Das in Fig. 1 dargestellte lokale Netzwerk ist für eine Anwendung in einem räumlich eng begrenzten Umfeld, insbesondere in einem Automobil geeignet. Dieses lokale Netzwerk zeigt die Teilnehmer 1, 2, 3, 4, 5, 6, welche über eine ringförmige Datenleitung 7 miteinander verbunden sind. Die Teilnehmer können sowohl Datenquellen als auch Datensenken darstellen. Die über die Datenleitung 7 übertragenen Daten können sowohl Audiodaten als auch Videodaten als auch Steuerdaten darstellen. Der Teilnehmer 1 stellt beispielsweise ein Navigationsgerät dar, welches Audiodaten von dem internen Speicher 1-3 für die Sprachausgabe der Zielführung über ihr Interface 1-2 an die Datenleitung 7 gibt, die durch eine Audiodatenausgabeeinheit 3 mit zugeordnetem Lautsprecher 3a zur Ausgabe gebracht werden. Die Audiosignale werden dabei von dem Navigationsgerät 1 des internen Laufwerk 1-3 ausgelesen und dem Interface 1-2 zur Weiterleitung an die Datenleitung 7 zur Audiowiedergabeeinheit 3 zur Verfügung gestellt. Daneben werden aber auch Steuerbefehle durch die Steuereinheit 1-1 zur Steuerung anderer Teilnehmer des lokalen Netzwerkes generiert und entsprechend den Audiodaten über das Interface 1-2 des Navigationsgerätes 1 als Datenquelle an die Datenleitung 7 gegeben. Die Steuerbefehle können vielfältigster Natur sein. Sie können beispielsweise die Zuordnung einzelner Audiodaten zu bestimmten Audiowiedergabeeinheiten festlegen oder auch andere Betriebsparameter bestimmen.

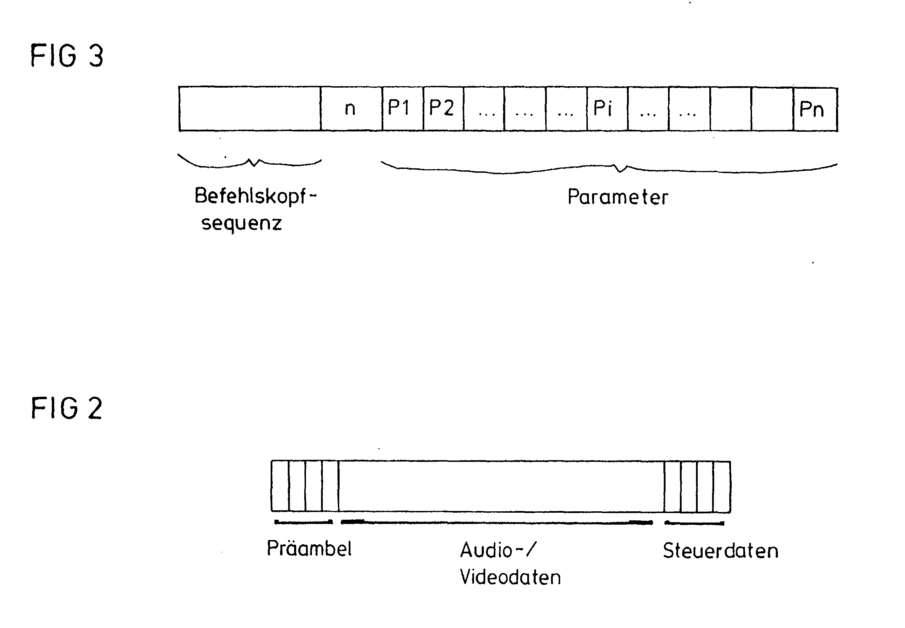

Neben dem gewöhnlichen Steuerbefehl können aber auch Steuerbefehle durch das Navigationsgerät 1 generiert werden, welche eine nach den Eigenschaften der Datenquelle 1 festgelegte Länge zeigen. Diese Länge ist bedingt durch den Aufbau mit einer Befehlskopfsequenz, eine Angabe zu der Anzahl an nachfolgenden Parametern und die nachfolgenden hierarchisch gegliederten Parametern. Der Aufbau wird im folgenden anhand der Fig. 3 näher beschrieben. Dieser Steuerbefehl einer festgelegten Länge, die nicht durch die anderen Teilnehmer 2, 3, 4, 5, 6 des lokalen Netzwerkes bestimmt ist, wird in dem ringförmigen Netzwerk nacheinander den einzelnen Teilnehmern zugeführt und anschließend an den nachfolgenden Teilnehmer weitergeleitet bis das Navigationsgerät 1 diesen Steuerbefehl wieder zugeführt bekommt. Damit ist sichergestellt, daß alle Teilnehmer des Netzwerkes diesen Steuerbefehl erhalten haben und ihn soweit er für sie bestimmt ist, interpretiert, ausgewertet und ihn dementsprechend ausgeführt haben.

Im vorliegenden Beispiel sind die Teilnehmer 4 und 6 als Datensenken ausgebildet, die über ihr Interface 4-2, 6-2 den Steuerbefehl von ihrem jeweiligen vorhergehenden Teilnehmer 3, 5 im ringförmigen Netzwerk zugeführt bekommen haben. Die Steuereinheit 4-1, 4-2 bekommt den Steuerbefehl mit den n Paramtern zugeführt. Sie interpretiert aber nicht grunsätzlich alle n Parameter, sondern die ersten m Parameter aus der Folge von n Parametern, die Bestandteil des Steuerbefehls sind. Die Parameter die über den m-ten Parameter hinausgehen werden nicht mehr durch die Datensenke 4,6 respektive durch deren Steuereinheit 4-1, 6-1 interpretiert. Die Zahl der zu interpretierenden Parameter der einzelnen Datensenken 4,6 hängt individuell von deren Eigenschaften ab. Die Datensenke 4 ist nur in der Lage drei (m1) der zehn der von der Datenquelle 1 im Steuerbefehl übertragenen (n) Parameter zu interpretieren, während die Datensenke 6 in der Lage ist, 7 (M2) Parameter zu interpretieren. Entsprechend den interpretierten 3 bzw. 7 Parametern werden jeweils entsprechende Videodaten aus einem Speicher 4-3, 6-3 der Datensenke 4, 6 entnommen und über die Steuereinheit 4-1, 6-1 der zugeordneten Bildausgabeeinheit 4a, 6a zugeführt. Hierdurch wird in der Bildausgabeeinheit 4a ein deutlich weniger detailliertes Gesamtbild mit den Bildinhalten, welche den drei interpretierten Parametern (m1) entsprechend dargestellt. Dagegen erweist sich das in der Bildausgabeeinheit 6a dargestellte Bild als wesentlich detaillierter, denn es zeigt die Videodaten, die den sieben interpretierten Parametern (m2) entsprechen, weshalb aufgrund der erhöhten Anzahl an interpretierten Parametern ein detaillierteres, spezifischeres Gesamtbild gegeben ist. In den Speichern 4-3, 6-3 sind einzelne Videodaten, das können einzelne Grafikelemente, Stillbilder oder Videosequenzen sein, die einzelnen Parametern zugeordnet. Dabei können in den einzelnen Speichern 4-3, 6-3 unterschiedliche Videodaten einem einzelnen Parameter zugeordnet sein, wodurch an den verschiedenen Bildausgabeeinheiten 4a, 6a trotz einheitlichem Steuerbefehls deutlich unterschiedliche Gesamtbilder ausgegeben werden. Diese Gesamtbilder unterscheiden sich somit nicht nur in der Detailliertheit (durch die unterschiedliche Anzahl an interpretierten Parametern), sondern ggf. auch in dem einzelnen Bildinhalten für einen einzelnen Parameter.

Der Steuerbefehl enthält zusätzlich in seiner Befehlskopfsequenz eine Befehlsfolge, die durch die Steuereinheit 4-1, 6-1 der Datensenke ausgewertet wird und dementsprechend die Eigenschaften Bilddarstellung in der Datensenke 4, 6 zugeordneten Bildausgabeeinheit 4a, 6a festgelegt. Dabei werden die Bildeigenschaften, insbesondere Kontrast, Farbe, Helligkeit, Blickwinkel, Ausschnitt u. ä., durch die Datenquelle, respektive deren Steuereinheit 1-1 mittels des Steuerbefehls über die Steuereinheit 4-1, 6-1 festgelegt.

Die Speicher 4-3, 6-3 sind als Leseschreibspeicher ausgebildet, die in der Lage sind, in einem Einspeicherbetriebsmodus Videodaten eingeschrieben zu bekommen. In diesem Einspeicherbetriebsmodus, der beispielsweise durch das Navigationsgerät 1 iniziiert wird, wird durch das CD-ROM-Laufwerk 2 die neu einzuspeichernden Videodaten auf die Datenleitung 7 gegeben und zielgerichtet über das Interface 4-2 bzw. 6-2 und die Steuereinheit 4-1 bzw. 6-1 in den Speicher 4-3 bzw. 6-3 einbeschrieben. Damit stehen die neu einbeschriebenen Videodaten für eine spätere Darstellung aufgrund eines übermittelten Steuerbefehls mit entsprechenden Parametern zur Ausgabe zur Verfügung.

Da die Anzahl der von der Datensenke interpretierbaren Parameter m von deren Eigenschaften abhängt mit der zugeordneten Bildausgabeeinheit 4a bzw. 6a können die wiedergegebenen Bilder stark differieren.

Da die Anzahl der interpretierbaren Parameter m in den einzelnen Datensenken 4, 6 unabhängig ist von der Anzahl der Parameter (n) des Steuerbefehls der Datenquelle 1 ist, sind die Datensenken 4, 6 von der Datenquelle 1 entkoppelt, wie auch die Datensenken 4, 6 untereinander entkoppelt sind. Jeder dieser Teilnehmer 1, 4, 6 definiert nach seinen individuellen Eigenschaften, die Anzahl der Parameter (n, m) des Steuerbefehls, welche er in das Netzwerk einspeist (n) bzw. welche er interpretiert (m). Dadurch ergibt sich die Möglichkeit, einzelne Teilnehmer flexibel auf unterschiedlichste Weise zu steuern oder zu ersetzen, ohne das Rücksicht auf die anderen Teilnehmer genommen werden müsste.

Bei der Interpretation werden stets die ersten m Parameter des erfindungsgemäßen Steuerbefehls interpretiert, wobei der Wert m abhängt von den Eigenschaften der jeweiligen Datensenke. Ist der Wert m kleiner als der mitübertragene Wert n der Anzahl der übertragenen Parametern, so werden gesteuert durch die Steuereinheit 4-1, 6-1, die ersten m Parameter interpretiert und die entsprechenden Videodaten aus dem Speicher 4-3, 6-3 zur Ausgabe über die Bildausgabeeinheit 4a, 6a gebracht. Ist dagegen der Wert n größer als der Wert m der übertragenen Parameter, so wird die Anzahl der interpretierten und ausgewerteten Parameter gleich der Zahl n gesetzt. Damit werden alle übertragenen Parameter interpretiert und nicht versucht, weitere, tatsächlich nicht übertragene Parameter zu interpretieren. Damit ergibt sich eine sehr effiziente Steuerung der Ausgabe der Videodaten auf Basis der übertragenen Anzahl an Parametern.

Ein vereinfachtes Beispiel eines derartigen Steuerbefehls von hierarchischer Parameterstruktur mit 4 Parametern n könnte folgende Struktur haben: "Befehlskopfsequenz; 4; blau, Tankstelle, zwei Zapfsäulen, ein Zapfhahn". Eine Datensenke, die alle vier Parameter (m) interpretiert und entsprechende Grafik oder Videodaten zur Ausgabe bringen kann, könnte eine blaue Tankstelle mit zwei Zapfsäulen, die jeweils einen Zapfhahn zeigen auf ihrer Bildausgabeeinheit zur Ausgabe bringen. Dagegen könnte eine andere Datensenke, die nur zwei Parameter (m) interpretieren kann, eine königsblaue Darstellung eines Tankstellensymbols zur Anzeige bringen, da sie nicht in der Lage ist, weitere Parameter zu interpretieren bzw. entspechende Videodaten zur Ausgabe zu bringen.

Hier unterscheidet sich der repräsentative Bildinhalt des Parameters "Tankstelle" in den beiden Datensenken deutlich, wobei m der einen Datensenke allein das Symbol "Tankstelle" wiedergegeben wird, wird bei der anderen Datensenke ein dreidimensionales Bild einer Tankstelle zur Wiedergabe gebracht. Diese unterschiedliche Interpretation des einen einzigen Steuerbefehls ist bedingt durch die Eigenschaften der jeweiligen Datensenke und führt damit zu unterschiedlichen Darstellungen des durch die Datenquelle iniziierten Steuerbefehls zur Darstellung eines Bildes.

In Figur 2 ist der Aufbau eines Frames für die kontinuierliche, synchrone Übertragung von Quell- (Audio und/oder Videodaten) sowie Steuerdaten dargestellt. Dieser Aufbau ist aus der EP 0 725 522 A2
bekannt. Der Frame zeigt eine Präambel von vier Bit, die zur Synchronisation der Vielzahl in einem kontinuierlichen Datenstrom aufeinanderfolgenden Frames verwendet wird, gefolgt von einem zusammenhängenden Bereich für die Übertragung von Audiound/oder Videodaten, gefolgt von mehreren Bitpositionen für die Übertragung von Steuerdaten. Ein Steuerbefehl wird dabei auf einer bestimmten Steuerbitpostion der aufeinanderfolgenden Frames hintereinander einbeschrieben, wodurch sich der Steuerbefehl über eine Vielzahl von aufeinanderfolgenden Frames erstreckt. Ein Aufbau eines erfindungsgemäßen Steuerbefehls, der auf eine bestimmte Steuerbitposition gem. Fig. 2 eingeschrieben wird, ist, in Fig. 3 dargestellt.

Der Steuerbefehl zeigt eine Befehlskopfsequenz, die die Art des Steuerbefehls repräsentiert. Daran schließt sich eine Angabe zu der Anzahl der übertragenen Parameter (n) an. Anschließend folgen dann die einzelnen Parameter (p1, p2, ..., pn) in einer hierarchischen Gliederung vom Allgemeinen zum Detaillierteren. Dabei ist die Länge, respektive die Anzahl der Parameter n allein durch die Datenquelle ohne Bezug zu einer Datensenke festgelegt. Sie differiert abhängig von den Eigenschaften einer Datenquelle, somit von Datenquelle zu Datenquelle. Entsprechendes gilt für die Datensenken die auf entsprechende Weise in der Anzahl der interpretierten Parametern (n) differieren.

## Patentansprüche

1. Lokales Netzwerk mit mehreren Teilnehmern,
die miteinander mittels einer optischen Datenleitung (7) zur Übertragung von Audio- und/oder Videodaten sowie von Steuerdaten zu einem ringförmigen Netzwerk verbunden sind,
wobei wenigstens ein Teilnehmer (1) eine Datenquelle für Audio- und/oder Videodaten und/oder Steuerdaten darstellt und wenigstens ein Teilnehmer (4,6) eine Datensenke für die übertragenen Audio- und/oder Videodaten und/oder Steuerdaten darstellt,
die Datenquelle (1) eine Steuereinheit (1-1) und ein Interface (1-2) zur ringförmigen Datenleitung (7) aufweist, die geeignet ist, einen Steuerbefehl mit durch die Datenquelle (1) festgelegter Länge über das Interface (1-2) an die ringförmige Datenleitung (7) zu geben,
die Datensenke (4;6) eine Steuereinheit (4-1, 6-1) zur Steuerung der Datensenke (4,6), eine Bildausgabeeinheit (4a, 6a), ein Interface (4-2, 6-2) und einen Speicher (4-3, 6-3) mit Videodaten aufweist, die gesteuert durch die Steuereinheit (4-1, 6-1) zur Ausgabe über die Bildausgabeeinheit (4a, 6a) geeignet sind
wobei der Steuerbefehl eine Befehlskopfsequenz und eine Folge von n Parametern, n >= 2, aufweist und die Steuereinheit (4-1, 6-1) geeignet ist, über das Interface (4-2, 6-2) zugeführte Steuerbefehle mit durch die Datenquelle (1) festgelegter Länge, die eine Befehlskopfsequenz und eine Folge von mehreren Parametern aufweisen, zu interpretieren, **dadurch gekennzeichnet, dass** sie, wenn n >= m, die ersten m Parameter aus der Folge von n Parametern interpretiert oder wenn n < m die ersten n Parameter interpretiert,
und aus dem Speicher (4-3, 6-3) der Datensenke (4,6) den interpretierten Parametern entsprechende Videodaten ausliest und auf der Bildausgabeeinheit (4a, 6a) zur Ausgabe bringt.

2. Lokales Netzwerk nach Anspruchs 1,
**dadurch gekennzeichnet, dass** die Datenquelle (1) geeignet ist, einen Steuerbefehl mit einer Folge von n Parametern, n >= 2, an die ringförmige Datenleitung (7) zu geben, wobei die Parameter so angeordnet sind, dass die Parameter hierarchisch geordnet sind und die jeweils folgenden Parameter jeweils einen spezifischen, detaillierteren Inhalt aufweisen.

3. Lokales Netzwerk nach Anspruch 1 oder 2,
**dadurch gekennzeichnet, dass** die Datenquelle (1) geeignet ist, einen Steuerbefehl mit einer sich an die Befehlskopfsequenz anschließenden Angabe zur Anzahl (n) der nachfolgenden Parametern und einer Folge von n Parametern, n >= 2, über ihr Interface (1-2) an die ringförmige Datenleitung zu geben, und
dass die Datensenke (4,6) geeignet ist, über ihr Interface (4-2, 6-2) zugeführte Steuerbefehle mit durch die Datenquelle (1) festgelegter Länge, die mit einer sich an die Befehlskopfsequenz anschließenden Angabe zur Anzahl (n) der nachfolgenden Parametern und einer Folge von n Parametern, n >= 2, aufweisen, zu interpretieren,
indem die übermittelte Anzahl (n) mit der zu interpretierenden Zahl (m) an Parameter verglichen wird und
wenn n >= m die ersten m Parameter der Folge von n Parametern ausgewertet und die m entsprechenden Videodaten aus dem Speicher (4-3, 6-3) zur Ausgabe gebracht werden
oder wenn n < m die ersten n Parameter ausgewertet und die n entsprechenden Videodaten aus dem Speicher zur Ausgabe gebracht werden.

4. Lokales Netzwerk nach Anspruch 1, 2 oder 3,
**dadurch gekennzeichnet, dass** die Steuereinheit (4-1, 6-1) der Datensenke (4,6) geeignet ist, mittels dem über das Interface (4-2, 6-2) zugeführten Steuerbefehl die ersten m Parameter, mit m ≤ n der Folge von n Parametern auszuwerten und die m entsprechenden Videodaten aus dem Speicher (4-3, 6-3) zur Ausgabe zu bringen und entsprechend dem Steuerbefehl die Bildeigenschaften insbesondere wie Kontrast, Farbe, Helligkeit, Blickwinkel, Ausschnitt zu wählen.

5. Verfahren zur Übertragung von digitalen Audio- und/oder Videodaten sowie von Steuerdaten in einem ringförmigen Lokalen Netzwerk nach Anspruch 1, bei dem in einer Datenquelle (1) ein Steuerbefehl generiert wird, der eine variable, durch die Datenquelle festgelegte Länge aufweist,
und der über das Interface (1-2) an die ringförmige Datenleitung (7) gegeben wird,
wobei wenigstens eine Datensenke (4,6) eine Steuereinheit (4-1, 6-1) zur Steuerung der Datensenke (4,6), eine Bildausgabeeinheit (4a, 6a), ein Interface (4-2, 6-2) und einen Speicher (4-3, 6-3) mit Videodaten aufweist, die gesteuert durch die Steuereinheit (4-1, 6-1) zur Ausgabe über die Bildausgabeeinheit (4a, 6a) geeignet sind,
wobei der Steuerbefehl eine Befehlskopfsequenz und eine Folge von n Parametern, n >= 2, aufweist, und der über das Interface (4-2, 6-2) zugeführte Steuerbefehl mit variabler, durch die Datenquelle (1) festgelegter Länge, welcher eine Befehlskopfsequenz und eine Folge von mehreren Parametern aufweist, durch die Datensenke (4,6) interpretiert wird, **dadurch gekennzeichnet, dass** wenn n >= m die ersten m Parameter aus der Folge von n Parametern interpretiert werden, oder wenn n < m die ersten n Parameter interpretiert werden,
und aus dem Speicher (4-3, 6-3) der Datensenke (4,6) den interpretierten Parametern entsprechende Videodaten ausliest und auf der Bildausgabeeinheit (4a, 6a) zur Ausgabe bringt.

6. Verfahren zur Übertragung von digitalen Audio- und/oder Videodaten sowie von Steuerdaten in einem ringförmigen Lokalen Netzwerk nach Anspruch 5,
**dadurch gekennzeichnet, dass** die Parameter des Steuerbefehls nach dem m-ten Parameter nicht interpretiert werden.

7. Verfahren zur Übertragung von digitalen Audio- und/oder Videodaten sowie von Steuerdaten in einem ringförmigen Lokalen Netzwerk nach Anspruch 5 oder 6,
**dadurch gekennzeichnet, dass** die Datenquelle (1) einen Steuerbefehl mit einer Folge von n Parametern, n >= 2, an die ringförmige Datenleitung (7) gibt, wobei die Parameter so angeordnet sind, dass die Parameter hierarchisch geordnet sind und die jeweils folgenden Parameter jeweils einen spezifischeren, detaillierteren Inhalt aufweisen.

8. Verfahren zur Übertragung von digitalen Audio- und/oder Videodaten sowie von Steuerdaten in einem ringförmigen Lokalen Netzwerk nach Anspruch 5, 6 oder 7,
**dadurch gekennzeichnet, dass** die Datenquelle (1) einen Steuerbefehl mit einer sich an die Befehlskopfsequenz anschließenden Angabe zur Anzahl (n) der nachfolgenden Parametern und einer Folge von n Parametern, n >= 2, generiert und diesen über ihr Interface an die ringförmige Datenleitung (7) gibt,
dass die Datensenke (4,6) den über ihr Interface (4-2, 6-2) zugeführten Steuerbefehl mit seiner variablen, durch die Datenquelle (1) festgelegten Länge zu interpretieren, indem die übermittelte Anzahl (n) mit der zu interpretierenden Zahl (m) an Parameter verglichen wird und
wenn n >= m die ersten m Parameter der Folge von n Parametern ausgewertet und die m entsprechenden Videodaten aus dem Speicher (4-3, 6-3) zur Ausgabe gebracht werden oder wenn n < m die ersten n Parameter ausgewertet und die n entsprechenden Videodaten aus dem Speicher (4-3, 6-3) zur Ausgabe gebracht werden.

9. Verfahren zur Übertragung von digitalen Audio- und/oder Videodaten sowie von Steuerdaten in einem ringförmigen Lokalen Netzwerk nach einem der Ansprüche 5 bis 8, **dadurch gekennzeichnet, dass** die Datensenke (4,6) in einen Einspeicherbetriebszustand überführbar ist, in dem über das Interface (4-2, 6-2) zugeführte Videodaten in dem Speicher (4-3, 6-3) der Datensenke eingeschrieben werden und diese Videodaten in gewöhnlichen Betriebszustand mittels der Steuereinheit (4-1, 6-1) aufgrund eines spezifischen Steuerbefehls zur Ausgabe gebracht werden können.

10. Verfahren zur Übertragung von digitalen Audio- und/oder Videodaten sowie von Steuerdaten in einem ringförmigen Lokalen Netzwerk nach einem der Ansprüche 5 bis 9, **dadurch gekennzeichnet, dass** die Anzahl der zu interpretierenden Parameter m durch die Eigenschaften der Datensenke (4,6) unabhängig von der Datenquelle (1) bestimmt wird.

11. Verfahren zur Übertragung von digitalen Audio und/oder Videodaten sowie Steuerdaten in einem ringförmigen lokalen Netzwerk nach einem der Ansprüche 5 bis 10, **dadurch gekennzeichnet, dass** die Steuereinheit der Datensenke (4,6) die Bildausgabe an der Bildausgabeeinheit (4a, 6a) in den Bildeigenschaften insbesondere wie Kontrast, Farbe, Helligkeit, Blickwinkel, Ausschnitt steuert und die Steuerung (4-1, 6-1) anhand des über das Interface (4-2, 6-2) zugeführten Steuerbefehls bestimmt wird.

## Claims

1. Local network
with a plurality of subscribers which are connected to one another to form a ring-like network by means of an optical data line (7) for the transmission of audio and/or video data as well as control data, wherein at least one subscriber (1) constitutes a data source for audio and/or video data and/or control data and at least one subscriber (4, 6) constitutes a data sink for the transmitted audio and/or video and/or control data,
the data source (1) has a control unit (1-1) and an interface (1-2) to the ring-like data line (7) which is adapted to give a control command with a length fixed by the data source (1) to the ring-like data line (7) via the interface (1-2),
the data sink (4; 6) has a control unit (4-1, 6-1) for control of the data sink (4, 6), a picture output unit (4a, 6a), an interface (4-2, 6-2) and a memory (4-3, 6-3) with video data which are adapted for output via the picture output unit (4a, 6a) under the control of the control unit (4-1,6-1),
wherein the control command has a command header sequence and a sequence of n parameters n ≥ 2 and the control unit (4-1, 6-1) is adapted to interpret control commands supplied via the interface (4-2, 6-2) with a length fixed by the data source (1) and having a command header sequence and a sequence of several parameters,
**characterised in that** when n ≥ m it interprets the first m parameters of the sequence of n parameters or when n < m it interprets the first n parameters,
and reads out video data corresponding to the interpreted parameters from the memory (4-3, 6-3) of the data sink (4, 6) and outputs them on the picture output unit (4a, 6a).

2. Local network as claimed in Claim 1, **characterised in that** the data source is adapted to give a control command with a sequence of n parameters n ≥ 2 to the ring-like data line (7), wherein the parameters are arranged in such a way that the parameters are ordered hierarchically and the respective successive parameters each have a specific more detailed content.

3. Local network as claimed in either Claim 1 or Claim 2, **characterised in that** the data source (1) is adapted to give a control command with a statement following the command header sequence giving the number (n) of following parameters and a sequence of n parameters n ≥ 2 to the ring-like data line via its interface (1-2), and
that the data sink is adapted to interpret control commands supplied via its interface (4-2, 6-2) with a length fixed by the data source (1) and with a statement following the command header sequence giving the number (n) of following parameters and a sequence of n parameters n ≥ 2,
by comparing the transmitted number (n) with the number (m) of parameters to be interpreted, and when n ≥ m the first m parameters of the sequence of n parameters are evaluated and the m corresponding video data are output from the memory (4-3, 6-3), or when n < m the first n parameters are evaluated and the n corresponding video data are output from the memory.

4. Local network as claimed in Claims 1, 2 or 3,
**characterised in that** the control unit (4-1, 6-1) of the data sink (4-6) is adapted to evaluate the first m parameters with m ≤ n of the sequence of n parameters by means of the control command supplied via the interface (4-2, 6-2) and to output the m corresponding video data from the memory (4-3, 6-3) and to select the picture characteristics such as in particular contrast, colour, brightness, angle of view, window, in accordance with the control command.

5. Method for the transmission of digital audio and/or video data as well as control data in a ring-like local network as claimed in Claim 1, in which a control command having a variable length fixed by the data source is generated in a data source (1) and is passed to the ring-like data line (7) via the interface (1-2),
wherein at least one data sink (4, 6) has a control unit (4-1, 6-1) for control of the data sink (4, 6), a picture output unit (4a, 6a), an interface (4-2, 6-2) and a memory (4-3, 6-3) with video data which are adapted for output via the picture output unit (4a, 6a) under the control of the control unit (4-1, 6-1),
wherein the control command has a command header sequence and a sequence of n parameters n ≥ 2 and the control unit (4-1, 6-1) is adapted to interpret control commands supplied via the interface (4-2, 6-2) with a length fixed by the data source (1) and having a command header sequence and a sequence of several parameters,
**characterised in that** when n ≥ m it interprets the first m parameters of the sequence of n parameters or when n < m it interprets the first n parameters,
and reads out video data corresponding to the interpreted parameters from the memory (4-3, 6-3) of the data sink (4, 6) and outputs them on the picture output unit (4a, 6a).

6. Method for the transmission of digital audio and/or video data as well as control data in a ring-like local network as claimed in Claim 5,
**characterised in that** the parameters of the control command are not interpreted after the m^{th} parameter.

7. Method for the transmission of digital audio and/or video data as well as control data in a ring-like local network as claimed in either Claim 5 or Claim 6,
**characterised in that** the data source (1) is adapted to give a control command with a sequence of n parameters n ≥ 2 to the ring-like data line (7), wherein the parameters are arranged in such a way that the parameters are ordered hierarchically and the respective successive parameters each have a more specific and more detailed content.

8. Method for the transmission of digital audio and/or video data as well as control data in a ring-like local network as claimed in any one of Claims 5, 6 or 7,
**characterised in that** the data source (1) gives a control command with a statement following the command header sequence giving the number (n) of following parameters and a sequence of n parameters n ≥ 2 to the ring-like data line via its interface (1-2), and
that the data sink is adapted to interpret control commands supplied via its interface (4-2, 6-2) with a length fixed by the data source (1) and with a statement following the command header sequence giving the number (n) of following parameters and a sequence of n parameters n ≥ 2,
by comparing the transmitted number (n) with the number (m) of parameters to be interpreted, and when n ≥ m the first m parameters of the sequence of n parameters are evaluated and the m corresponding video data are output from the memory (4-3, 6-3), or when n < m the first n parameters are evaluated and the n corresponding video data are output from the memory (4-3, 6-3).

9. Method for the transmission of digital audio and/or video data as well as control data in a ring-like local network as claimed in any one of Claims 5 to 8,
**characterised in that** the data sink can be changed over to a write operational state in which video data supplied via the interface (4-2, 6-2) are written in the memory (4-3, 6-3) of the data sink, and in the usual operational state these video data can be output by means of the control unit (4-1, 6-1) on the basis of a specific control command.

10. Method for the transmission of digital audio and/or video data as well as control data in a ring-like local network as claimed in any one of Claims 5 to 9,
**characterised in that** the number of parameters m to be interpreted is determined by the characteristics of the data sink (4, 6) independently of the data source (1).

11. Method for the transmission of digital audio and/or video data as well as control data in a ring-like local network as claimed in any one of Claims 5 to 10,
**characterised in that** the control unit of the data sink (4, 6) controls the picture output on the picture output unit (4a, 6a) in terms of the picture characteristics such as in particular contrast, colour, brightness, angle of view and window, and the control (4-1, 6-1) is determined with the aid of the control command supplied via the interface (4-2, 6-2).

## Revendications

1. Réseau local avec plusieurs participants qui sont reliés ensemble en un réseau en anneau au moyen d'une ligne optique (7) de données pour la transmission de données audio et/ou vidéo ainsi que de données de commande, sachant qu'au moins un participant (1) représente une source de données pour des données audio et/ou vidéo et/ou données de commande et qu'au moins un participant (4, 6) représente un collecteur de données pour les données audio et/ou vidéo et/ou de commande transmises, sachant que la source de données (1) comporte une unité de commande (1-1) et une interface (1-2) formant une ligne de données (7) en anneau qui est appropriée pour donner, par le biais de l'interface (1-2), une instruction de commande avec une longueur déterminée par la source de données (1) à la ligne de données (7) en anneau, sachant que le collecteur de données (4, 6) comprend une unité de commande (4-1, 6-1) pour la commande du collecteur de données (4, 6), une unité de sortie d'images (4a, 6a), une interface (4-2, 6-2) et une mémoire (4-3, 6-3) avec des données vidéo, qui, commandées par l'unité de commande (4-1, 6-1), sont appropriées pour l'affichage par l'unité de sortie d'images (4a, 6a) ; l'instruction de commande comportant une séquence de tête d'instructions et une suite de paramètres, | n ≥ 2 | , et l'unité de commande (4-1, 6-1) est appropriée pour interpréter par l'interface (4-2, 6-2) les instructions de commande réalisées avec la longueur déterminée par la source de données (1), instructions de commande qui comprennent une séquence de tête d'instructions et une suite de plusieurs paramètres, **caractérisé en ce que** l'unité de commande, lorsque n ≥ m, interprète les premiers paramètres m issus de la suite de paramètres n ou, lorsque n < m , interprète les premiers paramètres n et **en ce qu'**elle sélectionne les données vidéo correspondantes aux paramètres interprétés à partir de la mémoire (4-3, 6-3) du collecteur de données (4, 6) et qu'elle les affiche sur l'unité de sortie d'images (4a, 6a).

2. Réseau local selon la revendication 1, **caractérisé en ce que** la source de données (1) est appropriée pour donner une instruction de commande avec une suite de paramètres, |n ≥ 2|, à la ligne de données (7) en anneau, sachant que les paramètres sont disposés de telle sorte que les paramètres sont classés de manière hiérarchique et que chaque paramètre suivant comprend un contenu spécifique et détaillé.

3. Réseau local selon la revendication 1 ou 2, **caractérisé en ce que** la source de données (1) est appropriée pour donner à la ligne de données en anneau une instruction de commande avec une indication suivant la séquence de tête d'instructions, indication relative au nombre (n) des paramètres subséquents, et une suite de paramètres, |n ≥ 2|, par le biais de son interface (1-2), et **en ce que** le collecteur de données (4, 6) est approprié pour interpréter les instructions de commande transmises par son interface (4-2, 6-2) avec la longueur déterminée par la source de données (1), instructions qui comportent une indication suivant la séquence de tête d'instructions, indication relative au nombre (n) des paramètres suivants, et une suite de paramètres, |n ≥ 2|, l'indication transmise (n) étant comparée au nombre (m) de paramètres à interpréter et lorsque n ≥ m, les premiers paramètres m de la suite de paramètres n sont analysés et les données vidéo m correspondantes provenant de la mémoire (4-3, 6-3) sont affichées ou, lorsque n < m, les premiers paramètres n sont analysés et les données vidéo m correspondantes provenant de la mémoire sont affichées.

4. Réseau local selon la revendication 1, 2 ou 3, **caractérisé en ce que** l'unité de commande (4-1, 6-1) du collecteur de données (4, 6) est appropriée pour analyser, au moyen de l'instruction de commande transmise par l'interface (4-2, 6-2), les premiers paramètres m, avec m ≤ n, de la suite des paramètres n H et d'afficher les données vidéo m correspondantes provenant de la mémoire et de sélectionner selon l'instruction de commande les caractéristiques de l'image en particulier le contraste, la couleur, la clarté, l'angle optique et le détail.

5. Procédé pour la transmission de données digitales audio et/ou vidéo ainsi que de données de commande dans un réseau local en anneau selon la revendication 1, dans lequel une instruction de commande est générée dans une source de données (1), instruction qui comporte une longueur variable, déterminée par la source de données, et qui est transmise à la ligne de données (7) en anneau par l'interface (1-2), sachant qu'au moins un collecteur de données (4, 6) comporte une unité de commande (4-1, 6-1) pour commander le collecteur de données (4, 6), une unité de sortie d'image (4a, 6a), une interface (4-2, 6-2) et une mémoire (4-3, 6-3) avec des données vidéo qui, commandées par l'unité de commande (4-1, 6-1), sont appropriées pour l'affichage par l'unité de sortie d'image (4a, 6a), sachant que l'instruction de commande comprend une séquence de tête d'instructions et une suite de paramètres, |n ≥ 2|, et sachant que l'instruction de commande transmise par l'interface (4-2, 6-2) à longueur variable et déterminée par la source de données (1), laquelle longueur comporte une séquence de tête d'instructions et une suite de plusieurs paramètres, est interprétée par le collecteur de données (4, 6), **caractérisé en ce que**, lorsque n ≥ m, les premiers paramètres m issus de la suite de paramètres n sont interprétés ou, lorsque n < m, les premiers paramètres n sont interprétés, et **en ce que** les données vidéo correspondantes aux paramètres interprétés provenant de la mémoire (4-3, 6-3) du collecteur de données (4, 6) sont sélectionnées et affichées sur l'unité de sortie d'images (4a, 6a).

6. Procédé pour la transmission de données digitales audio et/ou vidéo ainsi que de données de commande dans un réseau local en anneau selon la revendication 5, **caractérisé en ce que** les paramètres de l'instruction de commande ne sont pas interprétés selon le paramètre m fois.

7. Procédé pour la transmission de données digitales audio/et ou vidéo ainsi que de données de commande dans un réseau local en anneau selon la revendication 5 ou 6, **caractérisé en ce que** la source de données (1) transmet une instruction de commande avec une suite de paramètres, |n ≥ 2|, à la ligne de données (7) en anneau, sachant que les paramètres sont disposés de telle sorte que les paramètres sont classés de manière hiérarchique et que chaque paramètre suivant comprend respectivement un contenu spécifique et détaillé.

8. Procédé pour la transmission de données digitales audio et/ou vidéo ainsi que de données de commande dans un réseau local en anneau selon la revendication 5, 6 ou 7, **caractérisé en ce que** la source de données (1) génère une instruction de commande avec une indication suivant la séquence de tête d'instructions, indication relative au nombre (n) de paramètres subséquents, et une suite de paramètres, |n ≥ 2|, et transmet ceux-ci à la ligne de données (7) en anneau par son interface, **en ce que** le collecteur de données (4, 6) interprète l'instruction de commande transmise par son interface (4-2, 6-2) avec sa longueur variable, déterminée par la source de données (1) en comparant le nombre transmis (n) au nombre (m) de paramètres à interpréter et, lorsque n ≥ m, les premiers paramètres m de la suite de paramètres n sont analysés et les données vidéo m correspondantes provenant de la mémoire sont affichées ou, lorsque n < m, les premiers paramètres n sont analysés et les données vidéo m correspondantes provenant de la mémoire (4-3, 6-3) sont affichées.

9. Procédé pour la transmission de données digitales audio et/ou vidéo ainsi que de données de commande dans un réseau local en anneau selon l'une quelconque des revendications de 5 à 8, **caractérisé en ce que** le collecteur de données (4, 6) est transformable en un état en service de mémorisation dans lequel les données vidéos transmises par l'interface (4-2, 6-2) sont inscrites dans la mémoire (4-3, 6-3) du collecteur de données et ces données vidéo peuvent être affichées en état normal de fonctionnement au moyen de l'unité de commande (4-1, 6-1) en raison d'une instruction de commande spécifique.

10. Procédé pour la transmission de données digitales audio et/ou vidéo ainsi que de données de commande dans un réseau local en anneau selon l'une quelconque des revendications de 5 à 9, **caractérisé en ce que** le nombre de paramètres m à interpréter par les propriétés du collecteur de données (4, 6) est déterminé indépendamment de la source de données (1).

11. Procédé pour la transmission de données digitales audio et/ ou vidéo ainsi que de données de commande dans un réseau local en anneau selon l'une quelconque des revendications de 5 à 10, **caractérisé en ce que** l'unité de commande du collecteur de données (4, 6) commande l'affichage d'images à l'unité d'affichage d'images (4a, 6a) dans les caractéristiques d'images en particulier comme le contraste, la couleur, la clarté, l'angle optique et le détail, et la commande (4-1, 6-1) est déterminée au moyen de l'instruction de commande transmise par l'interface (4-2, 6-2).
